# EUROPEAN PATENT APPLICATION

(11) **EP 2 330 816 A1**
(43) Date of publication of application: **08.06.2011**
(21) Application number: 09810243.7
(22) Date of filing: 31.08.2009
(51) Int. Cl.: H04N 5/63, H04N 5/76

(54) **POWER CONTROLLING DEVICE AND METHOD FOR VIDEO DISPLAY APPARATUS**

(30) Priority: 29.08.2008 KR 20080085028
(71) Applicant: LG Electronics Inc., Seoul 150-721 (KR)
(72) Inventor: JUNG, Jae Yong, Pyeongtaek-si Gyeonggi-do 451-731 (KR)
(74) Representative: Katérle, Axel
(86) International application number: PCT/KR2009/004878
(87) International publication number: WO 2010/024638

(57) **Abstract**

A power controlling device for a video display apparatus and a method of controlling the same are disclosed. If a power-on signal is inputted (SI 02) to a television set in a standby state (S101), a power control unit (10) switches on a first power switch (40) to supply power to the entire modules of the TV (S 103). A control unit (30) then displays a menu window (110) so that a user may select a specific function to be set from the menu window (110, S104). The control unit (30) determines the block that performs the corresponding functions in the memory (60) and switches on a second power switch (50) to supply power to the block performing the corresponding functions (S105). Once the user inputs a power-off signal to the television (S106), the power control unit (10) switches off the first power switch (40) to cut off the power controlled by the control unit (30, S107). The second power switch (50) maintains the on-state and supplies standby power to the control unit (30) for the functions set by the user to be performed (S 108).

## Description

### [TECHNICAL FIELD]

The present invention relates to an image display apparatus. More specifically, the present invention relates to a power controlling device of an image display apparatus and a method of controlling the same that is able to efficiently manage the power according to function setting.

### [BACKGROUND ART]

With the fast development of image display apparatuses such as monitors, televisions and the like in recent, various kinds of image display apparatuses having various functions have been introduced.

Especially, there is a power saving mode for economizing power out of the various functions of such an image display apparatus, which is referenced to as DPM (display power management) mode.

Such a DMP mode generally reduces the power supplied to a monitor more than the power supplied on a normal operation mode, if a user may not uses a monitor for a predetermined time period.

Here, technology for reducing the power consumed by the image display apparatus and the like has been under development in the air which the present invention pertains to.

### [DISCLOSURE OF INVENTION]

### [TECHNICAL PROBLEM]

However, a standby mode of the image display apparatus, that is one of conventional display power management functions, cannot perform control of plural televisions according to a serial communication method.

That is, the standby mode of such a television supplies the lowest power capable of receiving a remote control signal on a power management mode. On the standby mode, auxiliary functions required by the user, for example, reservation recording, power timer, alarming functions may not be set and performed.

As a result, there would be a disadvantage of time and power waste because the power has to be supplied to the entire television to perform the above functions.

Accordingly, there have been increasing demands for a power controlling device capable of supplying the lowest power enough to select and perform only functions required by the user to the television.

### [TECHNICAL SOLUTION]

To solve the problems, an object of the present invention is to provide a power controlling device of a video display apparatus and a method of controlling the same which is able to control only a function set by a user to be performed by the lowest power as possible in order to prevent power waste and to maximize user convenience.

To achieve these objects and other advantages and in accordance with the purpose of the invention, as embodied and broadly described herein, a method of controlling a power of the video display apparatus includes switching on a first power switch supplying the power to entire modules of the video display apparatus, if a power-on signal of the video display apparatus is input; switching on a second power switch supplying the power to perform a set function, if a specific function of the video display apparatus is set by a user; and switching off the first power switch, with maintaining the on-state of the second power switch to supply the power for performing the function set by the user, if a power-off signal is input by the user.

In another aspect of the present invention, power controlling device of a video display apparatus includes a signal processor receiving/processing a key signal input by a user; a first power switch switchable on/off according to a power-on signal supplied by the signal processor, to supply the power to entire modules of the video display apparatus; a memory storing information of a set function therein, if a specific function set by the user; a second power switch switchable on/off to supply the power to perform the set function; a power control unit controlling the on/off of the first power switch; and a control unit controlling the second power switch and controlling the on-state of the second power switch regardless of the power-off signal, if the information of the set function is stored in the memory.

In a further aspect of the present invention, a method of controlling a power of a video display apparatus includes outputting a predetermined user interface receiving at least one function performable in a standby state, by user selection; receiving the at least one function by user selection; storing information of the selected function in a memory; and controlling whether to perform the function selected in the standby state by using the information of the selected function stored in the memory.

### [ADVANTAGEOUS EFFECTS]

The present invention has following advantageous effects.

The power controlling device of the video display apparatus can supply the lowest power required to perform only a predetermined function set by a user out of various functions of the video display apparatus. As a result, there is an advantageous effect of efficient power management.

Furthermore, in case of a commercial television, a commercial module may be designed corresponding to a single board and only a function desired by the user may be selectively performable. As a result, there is another advantageous effect of maximized user satisfaction.

### [BRIEF DESCRIPTION OF THE DRAWINGS]

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 is a block view schematically illustrating a power controlling device according to an exemplary embodiment of the present invention;
FIG. 2 is a flow chart illustrating a method for controlling the power based on a specific function setting of a television according to an exemplary embodiment of the present invention;
FIGS. 3 and 4 are screen view illustrating a process of setting a specific function of the television according to the exemplary embodiment of the present invention; and
FIG. 5 is a flow chart illustrating a method for controlling the power when the specific function is terminated.

### [BEST MODE]

Reference will now be made in detail to the specific embodiments of the present invention, examples of which are illustrated in the accompanying drawings. Wherever possible, the same reference numbers will be used throughout the drawings to refer to the same or like parts.

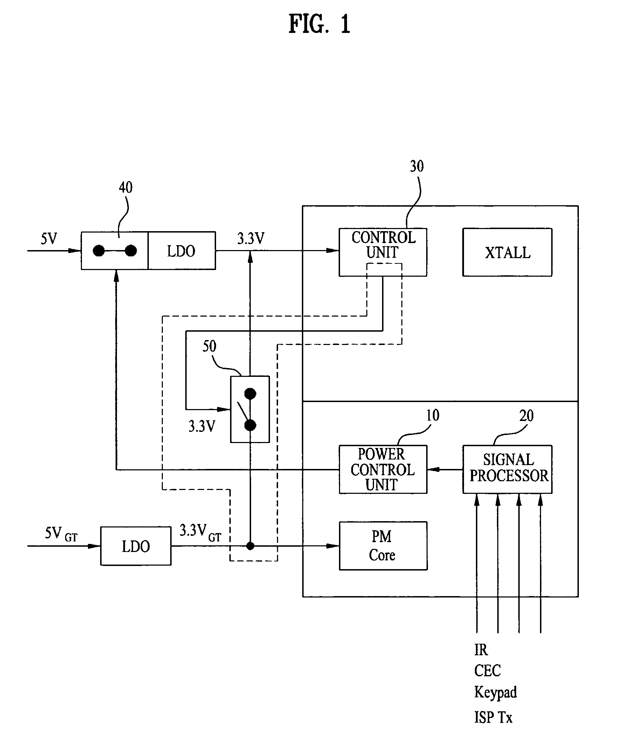

FIG. 1 is a block view schematically illustrating a power controlling device of an image display apparatus according to an exemplary embodiment of the present invention. As follows, a television is embodied as image display apparatus and the present invention may be applicable to any image display apparatuses capable of receiving/outputting an image signal.

As shown in FIG. 1, a power controlling device of a television according to an exemplary embodiment of the present invention includes a power control unit 10, a signal processor 20, a first power switch 40, a memory 60 and a second power switch 50. The power control unit 10 is provided in the power supply device of the television and it controls the power supplied by the power supply unit. The signal processor 20 receives and processes a key signal inputted by a user. the first power switch 40 is switched to supply the power to a control unit 30 controlling entire modules of the television, that is, controlling the television based on a power-on signal of a remote control or a main key that is supplied by the signal processor 20. If a specific one of various functions provided by the television is set by the user the memory 60, the corresponding function is stored in the memory 60. The second power switch 50 is switched to supply the power for performing the corresponding function set in the memory 60.

Here, if the power-on signal is inputted in a standby state of the television, the power control unit 10 switches on the first power switch 40 to supply the power of 5V to the control unit 30 controlling the entire modules.

If a specific function is set by the user in a state of the television tuned on, the control unit 30 controls information of the set function to be stored in the memory 60 and it switches on the second power switch 50 to supply the lowest power to blocks for operating the set function.

If the specific function of the television is set in the memory 60, the control unit 30 maintains the on-state of the second power switch 50 regardless of a power-off signal.

If the power-off signal is inputted, the power control unit 10 switches off the first power switch 40 to supply the lowest power required to maintain the standby state.

That is, if the specific function of the television is set in the memory 60 even with the power-off signal of the television inputted by the user, the on-state of the second power switch 50 is maintained continuously and the first power switch 40 is switched off.

For example, according to the prior art, in case the user sets a reservation recording function which is a specific one of various functions, the first power switch 40 is switched off in a standby state to supply no power to the entire modules of the television. Because of that, the television has to maintain the power-on state by switching on the first power switch and it supplies the power to the entire modules to perform the set corresponding function.

In contrast, according to the present invention, in case a reservation record function that is a specific one of various functions is set in the memory 60, the second power switch 50 maintains the on state regardless of the power-off signal and thus the set reservation record function ma be performed by the power supplied to the control unit 30.

Here, if the power-on signal is inputted by the user in a standby state having the power of the television being off, the first power switch 40 is switched by the power control unit 10 and it supplies 5V of the power to the control unit 30 to supply the power to entire modules of the television.

If a specific function is set by the user in a state of the television being powered on, the second power switch 50 is switched by the control unit 30 and it maintains the on state. Even if the power is off, the power used in the standby module is supplied to the control unit 30 to supply the lowest power required to perform the corresponding function.

Here, the memory 60 stores information including processing programs of the control unit 10. especially, if at least one of a commercial function, broadcasting signal reservation record function according to real time clock (RTC) operation, timer function, alarm function, automatic power control function and LED power control function is set in the television, the memory 60 stores information of corresponding set function.

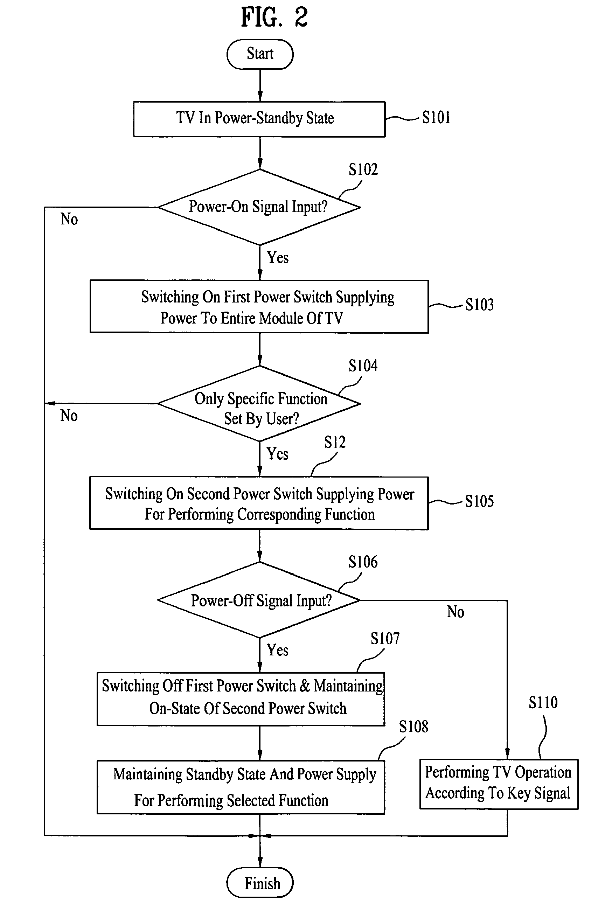

A method for controlling the power controlling device of the television having the above configuration will be described in reference to FIGS. 2 to 4.

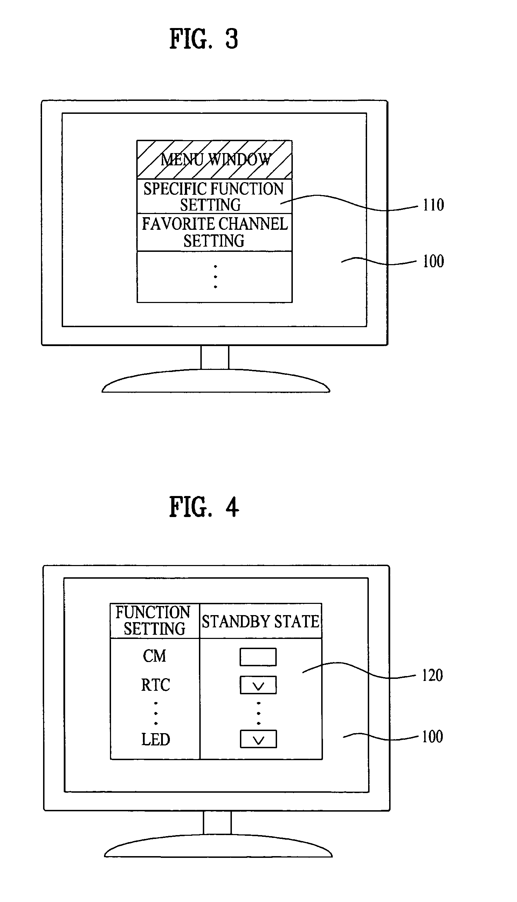

FIG. 2 is a flow chart illustrating a method for controlling the power based on specific function setting of the television according to an exemplary embodiment of the present invention and FIG. 3 is a screen view illustrating a specific function setting process of the television.

As shown in FIG. 2, if a power-on signal is inputted by a user via a remote control or a local key provided in a main unit of the television in a standby state having the power of the television being powered off (S102), the power control unit 10 switches on the first power switch 40 to supply the power to the entire modules of the television (S103).

Hence, when the power of 5V is supplied to the control unit 30 and the power is supplied to the entire modules of the television after the first power switch 40 is switched on, the control unit 30 displays a menu window 110 according to a request signal for a specific function setting menu inputted by the user as shown in FIG. 3.

FIGS. 3 and 4 are screen views illustrating user interface, that is, menu window having a specific function set by the user, respectively. in reference to FIG. 3, the menu window 110 is displayed by the request signal inputted by the user such that the user may select a specific function setting menu from the menu window 110 (S104).

Then, as shown in FIG. 4, the control unit 30 displays a function setting window 120 that is a sub-menu according to the specific function setting. That is, functions operable in the standby state having the power of the television being off may be provided.

Once the user selects and sets RCT and LED functions, the control unit 30 stores information on the functions set by the user in the memory 60.

Hence, the control unit 30 determines the block that performs the corresponding functions preset in the memory 60 and it switches on the second power switch 50 to supply the power to the block performing the corresponding functions (S105).

To perform the corresponding functions set by the user, the second power switch 50 continuously supplies the power to the block performing the corresponding functions, with maintaining its on-state.

Once the user inputs the power-off signal of the television (S106), the power control unit 10 switches off the first power switch 40 to cut off the power controlled by the control unit 30 (S107).

That is, the power control unit 10 switches on and off the first power switch 40 according to the power-on/off signal inputted by the user.

In contrast, the second power switch 50 maintains the on-state and it supplies the stand-by power to the control unit 30 for the functions set by the user to be performed (S108).

Here, as set by the user in FIG. 4, the LED of the television having the power powered off is turned on and the standby power is supplied to the control unit by the second power switch to perform RTC function.

In the meanwhile, if the user inputs another key signal, not the power-off signal in the step S106, a predetermined normal operation corresponding to the input signal is performed (S110).

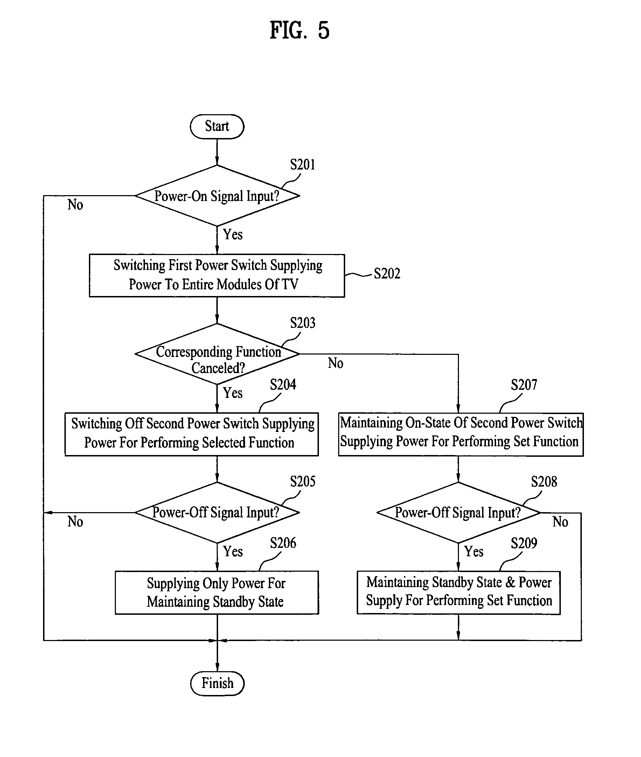

FIG. 5 is a flow chart illustrating a method of controlling the power if the specific function of the television is canceled according to the embodiment of the present invention.

In reference to FIG. 5, after the user sets a specific function to the memory 60 as mentioned above, the power is turned off. If the power-on signal is re-inputted (S201), the power control unit 10 switches on the first power switch 40 to supply the power to the entire modules of the television (S202).

Hence, the first power switch 40 is switched on and the power of 5V is supplied to the control unit 30 to supply the power to the entire module of the television. Then, it is determined whether a cancel signal of the specific function set by the user is inputted (S203).

If it is determined that the cancel signal of the specific function set by the user is inputted, the control unit 30 stores that the set function is canceled in the memory 60.

Hence, the second power switch 50 supplied the power to perform the corresponding function is switched off (S204).

If the user inputs the power-off signal (S205), the power control unit 10 switches off the first power switch 40 and it shuts off the power supplied to the control unit 30.

Then, the television maintains the standby state having the power turned off (S206).

In the meanwhile, if the cancel signal of the set specific function is not inputted by the user in the step S203, the control unit 30 performs the corresponding function of the television according to the input key signal, with maintaining the on-state of the second power switch 50 supplying the power to perform the corresponding function (S207).

After that, if the power-off signal is input by the user (S208), the power control unit 10 switches off the first power switch 40 and it shuts off the power supplied to the control unit 30.

Hence, the television is supplied the power by the second power switch 50 to perform the corresponding function set by the user, maintaining the standby state having the power turned off (S209).

Here, the specific function set by the user, of which information is stored in the memory 60, may be at least one of a commercial function, broadcasting signal reservation record function according to RTC, timer function, alarming function, automatic power control function and LED power control function. The function set by the user out of the above functions may be performable even when the power of the television is turned off.

Not shown in the drawings, a television according to another embodiment of the present invention may include an auxiliary switch provided on a main frame, which is capable of supplying the power to a corresponding block to perform a specific function set by a user.

That is, the user may switch on and off the auxiliary switch provided on the main frame of the television to supply the power to the corresponding block performing the specific function. If the specific function is set by the user in the menu window, the power is supplied to the corresponding block even in the power-off state.

In the meanwhile, the terminology user in the specification of the present invention is defined in consideration of functions and it may be varied according to purpose or practices of people who pertains to the art. As a result, the definition of terminology may be performed based on the content of the description.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

### [INDUSTRIAL APPLICABILITY]

The present invention has an industrial applicability.

According to the present invention, only a predetermined function set by a user out of various functions of a video display apparatus may be performable by the lowest power as possible.

## Claims

1. A method of controlling a power of the video display apparatus comprising:
switching on a first power switch supplying the power to entire modules of the video display apparatus, if a power-on signal of the video display apparatus is input;
switching on a second power switch supplying the power to perform a set function, if a specific function of the video display apparatus is set by a user; and
switching off the first power switch, with maintaining the on-state of the second power switch to supply the power for performing the function set by the user, if a power-off signal is input by the user.

2. The method of controlling the power of the video display apparatus as claimed in claim 1, further comprising:
storing information of the set function in a memory, if the specific function of the video display apparatus is set by the user.

3. The method of controlling the power of the video display apparatus as claimed in claim 2, wherein the step of switching on the second power switch supplying the power to perform the set function comprises:
determining a block supplied the power to perform the set function by using the information of the set function that is stored in the memory; and
switching on the second power switch supplying the power to the determined block.

4. The method of controlling the power of the video display apparatus as claimed in claim 1, the specific function set by the user is at least one of a broadcasting signal reservation record function according to Real Time Clock (RTC), timer function, alarm function, automatic power control function and LED power control function.

5. The method of controlling the power of the video display apparatus as claimed in claim 1, the step of switching on the first power switch, with maintaining the on-state of the second power switch comprises:
setting the video display apparatus in a standby state, with maintaining the on-state of the second power switch, wherein the power on signal is able to be received and processed in the standby state.

6. The method of controlling the power of the video display apparatus as claimed in claim 1, wherein the power supply for performing the set function is maintained even in a standby state operated according to the power-off signal, if the specific function set by the user is not canceled.

7. The method of controlling the power of the video display apparatus as claimed in claim 1, wherein the power supply for performing the set function uses a standby power.

8. The method of controlling the power of the video display apparatus as claimed in claim 2, further comprising:
storing cancelation of the set function in the memory, with switching off the second power switch, if the set function is canceled by the user.

9. The method of controlling the power of the video display apparatus as claimed in claim 1, further comprising:
receiving at least one function in a predetermined user interface, the at least one function performable in a standby state.

10. A power controlling device of a video display apparatus comprising:
a signal processor receiving/processing a key signal input by a user;
a first power switch switchable on/off according to a power-on signal supplied by the signal processor, to supply the power to entire modules of the video display apparatus;
a memory storing information of a set function therein, if a specific function set by the user;
a second power switch switchable on/off to supply the power to perform the set function;
a power control unit controlling the on/off of the first power switch; and
a control unit controlling the second power switch and controlling the on-state of the second power switch regardless of the power-off signal, if the information of the set function is stored in the memory.

11. The power controlling device of the video display apparatus as claimed in claim 10, wherein the control unit switches on the second power switch supplying the power to perform the set function, if the specific function of the video display apparatus is set by the user.

12. The power controlling device of the video display apparatus as claimed in claim 11, wherein the control unit determines a block receiving the power for performing the set function by using the information of the set function stored in the memory and the control unit switches on the second power switch to supply the power to the determined block.

13. The power controlling device of the video display apparatus as claimed in claim 10, wherein the function set by the user is at least one of a broadcasting signal reservation record function according to Real Time Clock (RTC), timer function, alarm function, automatic power control function and LED power control function.

14. The power controlling device of the video display apparatus as claimed in claim 10, wherein the video display apparatus is set to a standby state in which the video display apparatus is able to receive and process the power-on signal, if the first power switch is switched off.

15. The power controlling device of the video display apparatus as claimed in claim 10, wherein the second power switch maintains the switched-on state to perform the set function, even with the video display apparatus in a standby state set according to the power-off signal, if the function set by the user is not canceled.

16. The power controlling device of the video display apparatus as claimed in claim 10, wherein the second power switch switches on/off a standby power supplying the power for performing the set function.

17. The power controlling device of the video display apparatus as claimed in claim 10, wherein the control unit stores cancelation of the set function in the memory, if the function set by the user is canceled, and the control unit switches off the second power switch.

18. The power controlling device of the video display apparatus as claimed in claim 10, wherein the control unit controls to output a predetermined user interface receiving at least one function performable in a standby state.

19. A method of controlling a power of a video display apparatus comprising:
outputting a predetermined user interface receiving at least one function performable in a standby state, by user selection;
receiving the at least one function by user selection;
storing information of the selected function in a memory; and
controlling whether to perform the function selected in the standby state by using the information of the selected function stored in the memory.

20. The method of controlling the power of the video display apparatus as claimed in claim 19, wherein the step of the controlling whether to perform the function selected in the standby state by using the information of the selected function stored in the memory comprises,
switching of a first power switch supplying a power to entire modules of the video display apparatus, if a power-off signal is input, and maintaining the power supply for performing the selected function by maintaining the on-state of the second power switch.

21. The method of controlling the power of the video display apparatus as claimed in claim 20, wherein the step of the maintaining the on-state of the second power switch to supply the power for performing the selected function comprises:
determining a block receiving a power for performing the selected function by using the information of the selected function stored in the memory; and
switching on the second power switch for supplying a power to the determined block.

22. The method of controlling the power of the video display apparatus as claimed in claim 20, wherein the step of the maintaining the on-state of the second power switch to supply the power for performing the selected function comprises:
switching on the second power switch to supply a power to a control unit for performing the selected function.

23. The method of controlling the power of the video display apparatus as claimed in claim 20, wherein the function performable in the standby state is at least one of a broadcasting signal reservation record function according to Real Time Clock (RTC), timer function, alarm function, automatic power control function and LED power control function.

24. The method of controlling the power of the video display apparatus as claimed in claim 20, wherein the step of switching off the first power switch and maintaining the on-state of the second power switch comprises:
setting the video display apparatus to a standby state and maintaining the on-state of the second power switch.

25. The method of controlling the power of the video display apparatus as claimed in claim 20, wherein the power supply for performing the selected function is maintained even in a standby state set of the video display apparatus according to the power-off signal.

26. The method of controlling the power of the video display apparatus as claimed in claim 20, wherein the power supply for performing the selected function uses a standby power.

27. The method of controlling the power of the video display apparatus as claimed in claim 20, further comprising:
storing cancelation of the selected function in the memory, if the function selected by the user is canceled, and switching off the second power switch.
